# FASCICULE DE BREVET EUROPEEN

(11) **EP 3 313 687 B1**
(45) Date de publication et mention de la délivrance du brevet: **19.01.2022**
(21) Numéro de dépôt: 16742339.1
(22) Date de dépôt: 22.06.2016
(51) Int. Cl.: B60W 10/08, B60L 15/20, B60W 10/26, B60W 20/00, H01M 10/60, B60L 50/15, B60L 58/13, B60L 58/27, H01M 10/44, H01M 10/48, H01M 10/615, H01M 10/625, B60W 20/15

(54) **PROCÉDÉ DE GESTION DE LA TEMPÉRATURE D'UNE BATTERIE D'UN VÉHICULE HYBRIDE**
VERWALTUNGSVERFAHREN FÜR DIE TEMPERATUR DER BATTERIE EINES HYBRIDFAHRZEUGES
METHOD FOR BATTERY TEMPERATURE MANAGEMENT OF A HYBRID VEHICLE

(30) Priorité: 23.06.2015 FR 1555770
(43) Date de publication de la demande: 02.05.2018
(73) Titulaire: Renault S.A.S., 92100 Boulogne-Billancourt (FR)
(72) Inventeur: NAIR, Karima, 78000 Versailles (FR); ROUDEAU, Frédéric, 94400 Vitry Sur Seine (FR)
(86) Numéro de dépôt international: PCT/FR2016/051529
(87) Numéro de publication internationale: WO 2016/207548

(56) Documents cités:
- WO-A2-2008/023245
- GB-A- 2 416 631
- US-A1- 2010 070 123
- US-A1- 2012 261 397

## Description

La présente invention concerne un procédé de gestion de la température d'une batterie de traction d'un véhicule hybride.

Il est connu que les batteries de traction des véhicules hybrides ou électriques subissent des baisses de performance à basse température, notamment au niveau de la puissance disponible et/ou de la puissance acceptée en charge. Aussi, lorsque la température de batterie est trop basse, il est nécessaire de réchauffer la batterie le plus rapidement possible, de manière à restaurer au plus vite le niveau de prestation attendu. Pour ce faire, un système de chauffage est généralement associé à la batterie, ledit système pouvant être utilisé, soit en phase de roulage du véhicule, soit en phase stationnaire. L'invention se rapporte plus spécifiquement à un procédé de chauffage de la batterie, mis en œuvre essentiellement lorsque le véhicule se trouve en phase de roulage.

Un tel procédé est bien connu de l'homme du métier, notamment par l'exemple qu'en donne le document de brevet US 8 536 809. Ce document décrit un dispositif de commande conçu pour déterminer si une batterie a besoin d'être réchauffée en fonction d'une sortie d'un capteur de température de la batterie. Afin de réchauffer la batterie jusqu'à une valeur de température de consigne, le courant traversant la batterie est piloté en fonction de l'écart entre la température courante et la température de consigne, dans une boucle fermée. Plus précisément, la régulation de température est effectuée en scrutant l'écart de température et en rebouclant l'erreur de courant en différenciant bien les phases (courant triphasé) du moteur électrique. Autrement dit, cette stratégie de commande visant à réchauffer la batterie, contrôle uniquement une composante du courant triphasé, la composante de courant Iq correspondant au couple généré par le moteur électrique étant annulée afin de ne pas piloter la machine électrique en traction et ainsi uniquement réchauffer la batterie.

Toutefois, cette stratégie de commande du courant du moteur électrique exécutée pendant le réchauffage de la batterie dégrade le rendement de la machine électrique. En outre, elle provoque systématiquement une baisse de l'état de charge de la batterie, de sorte qu'en dessous d'un seuil minimal d'état de charge de la batterie, elle devient inapplicable.

Aussi, l'invention se propose de fournir un procédé amélioré de chauffage d'une batterie d'un véhicule automobile hybride permettant le fonctionnement de la batterie à ses performances optimales.

La demande de brevet US 2012/261397 A1 divulgue lui aussi un procédé de réchauffage d'une batterie de traction ne permettant pas le fonctionnement de la batterie à ses performances optimales.

Ce but est atteint grâce à un procédé de gestion de la température d'une batterie électrique d'un véhicule automobile en phase de roulage, ledit véhicule comprenant un groupe moto-propulseur hybride comprenant un moteur thermique et au moins une machine électrique alimentée par ladite batterie, ledit procédé comprenant une étape de chauffage de la batterie jusqu'à une valeur de consigne de température, l'étape de chauffage de la batterie comprenant une étape d'élaboration d'une consigne de couple à appliquer à la machine électrique, ladite consigne de couple étant apte à commander aux bornes de la batterie un courant de charge ou un courant de décharge de la batterie, en tenant compte d'une part, d'un premier écart entre une valeur courante de température et ladite valeur de consigne de température et, d'autre part, d'un second écart entre une valeur courante d'état de charge de la batterie et une valeur de consigne d'état de charge de la batterie, le procédé étant caractérisé en ce que l'étape d'élaboration de ladite consigne de couple comprend la génération d'un signal de commande PWM de ladite machine électrique, dont le rapport cyclique est contrôlé en fonction dudit second écart, le rapport cyclique étant supérieur à 0,5 lorsque ledit second écart est positif, le rapport cyclique étant inférieur à 0,5 lorsque ledit second écart est négatif.

Ainsi, la stratégie de pilotage de la batterie selon le procédé de l'invention, en plus de permettre de réchauffer la batterie, permet également de faire de la charge et de la décharge de la batterie suivant qu'un courant de charge ou de décharge de la batterie est piloté via la consigne de couple demandé à la machine électrique. En effet, la stratégie de l'invention est conçue pour piloter le courant de batterie non seulement en fonction de l'écart entre la température courante de batterie et une température de consigne mais également, en fonction de l'état de charge de la batterie, de sorte que suivant l'écart entre une valeur courante d'état de charge de la batterie et une valeur de consigne d'état de charge, on va pouvoir décharger ou charger la batterie et partant, permettre sa montée rapide en température tout en assurant une gestion de son état de charge.

Avantageusement, l'application desdits courants de charge et de décharge de la batterie est pilotée en fonction du signe dudit second écart.

Selon l'invention, l'étape d'élaboration de ladite consigne de couple comprend la génération d'un signal de commande PWM de ladite machine électrique, dont le rapport cyclique est contrôlé en fonction dudit second écart.

Selon l'invention, on fournit un signal PWM avec un rapport cyclique supérieur à 0,5 lorsque ledit second écart est positif.

Selon l'invention, on fournit un signal PWM avec un rapport cyclique inférieur à 0,5 lorsque ledit second écart est négatif.

Avantageusement, l'amplitude dudit signal PWM est régulée en fonction dudit premier écart.

De préférence, l'amplitude dudit signal PWM est proportionnelle audit premier écart.

Avantageusement, l'étape d'élaboration de ladite consigne de couple à appliquer à ladite machine électrique comprend la détermination de ladite consigne de couple sur la base dudit signal PWM généré précédemment auquel on déduit un couple représentatif des pertes au niveau de ladite batterie et un couple équivalent à la consommation d'un convertisseur DC-DC couplé à ladite batterie.

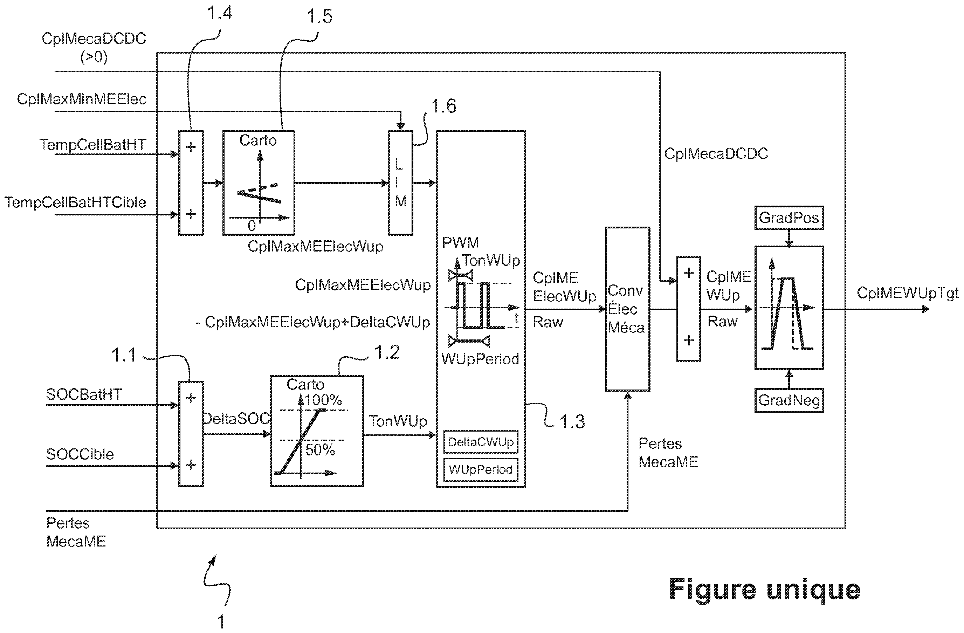

D'autres particularités et avantages de l'invention ressortiront à la lecture de la description faite ci-après d'un mode de réalisation particulier de l'invention, donné à titre indicatif mais non limitatif, en référence à la figure unique illustrant une architecture fonctionnelle 1 de la stratégie de pilotage de la batterie mise en œuvre par le procédé de chauffage de la batterie conforme à l'invention.

La stratégie de pilotage qui va être décrite selon l'exemple de réalisation est mise en œuvre sur un véhicule automobile équipé d'un groupe moto-propulseur hybride du type comprenant un moteur thermique pour assurer la traction, auquel est accouplée une machine électrique de type alterno-démarreur à courroie, pouvant être utilisé dans certaines phases d'utilisation du véhicule notamment pour réaliser la fonction stop-start. La machine électrique est apte à accepter la transmission de puissance dans un sens ou dans l'autre, selon que l'alterno-démarreur travaille en mode motrice (démarrage) ou en mode génératrice (alternateur). Cette réversibilité est assurée par un onduleur de tension, qui remplit également la fonction de redresseur. Cette machine électrique est donc alimentée par l'onduleur de tension, lui-même alimenté par une batterie haute tension 48V connectée à un convertisseur DC-DC.

La stratégie de pilotage de l'invention vise à forcer le cyclage de la batterie haute tension en pilotant la machine électrique constituée par l'alterno-démarreur à courroie du groupe moto-propulseur hybride, pour accélérer la montée en température interne de la batterie en roulage et ainsi, lui permettre de pouvoir distribuer l'énergie nécessaire à la réalisation de différentes prestations requises. Notamment, à froid, on veut pouvoir assurer la disponibilité en termes de performances du groupe moto-propulseur avec alterno-démarreur et batterie haute tension en un temps donné. Egalement, à froid, on veut pouvoir assurer la disponibilité de la fonction stop-start du groupe moto-propulseur avec alterno-démarreur et batterie haute tension en un temps donné. En particulier, la fonction de chauffage de la batterie mise en œuvre par la stratégie de pilotage de l'invention doit permettre au groupe moto-propulseur d'atteindre ses pleines performances en moins de 10 minutes, pour des températures extérieures inférieures à 0°C, par exemple.

Pour ce faire, comme il va être expliqué plus en détail en référence à la figure unique, la stratégie de pilotage est conçue pour faire cycler une consigne de couple de la machine électrique entre charge et décharge de la batterie, afin d'accélérer la montée en température de la batterie. Le principe étant de piloter en couple la machine électrique, la stratégie de pilotage pourra avantageusement être intégrée, au niveau architecture, dans la partie couche de commande appelée loi de gestion de l'énergie, réalisée dans une unité de contrôle électronique, de type superviseur, apte à délivrer une consigne de couple à la machine électrique.

La stratégie de pilotage est donc conçue pour élaborer une telle consigne de couple de cyclage de la machine électrique CplMEWUpTgt, cette consigne de couple étant en premier lieu proportionnelle à l'écart de température DeltaT constaté entre une valeur de consigne de température des cellules de la batterie TempCellBatHTCible et une valeur courante de température TempCellBatHT. La consigne de couple est en outre élaborée pour commander la charge et la décharge de la batterie car, en plus de contrôler la température de batterie, la stratégie de pilotage est conçue pour scruter également l'état de charge de la batterie et pour piloter la machine électrique via la consigne de couple élaborée en fonction de cet état de charge et, plus précisément, en fonction d'un écart DeltaSOC entre une valeur courante d'état de charge de la batterie SOCBatHT et une valeur de consigne d'état de charge de la batterie SOCCible.

Ainsi, la consigne de couple élaborée suivant la stratégie de pilotage de l'invention est apte à commander, aux bornes de la batterie, un courant de charge ou un courant de décharge de la batterie, en tenant compte d'une part, de l'écart de température DeltaT entre une valeur courante de température TempCellBatHT et la valeur de consigne de température TempCellBatHTCible et, d'autre part, de l'écart d'état de charge DeltaSOC entre une valeur courante d'état de charge de la batterie SOCBatHT et la valeur de consigne d'état de charge de la batterie SOCCible. L'application d'un courant de charge ou de décharge de la batterie est plus précisément pilotée en fonction du signe de l'écart DeltaSOC entre la valeur courante d'état de charge de la batterie et la valeur de consigne d'état de charge de la batterie. Ainsi, afin de monter en température, la batterie doit alterner des phases de charge et de décharge en pilotant la machine électrique en traction et en régénération. Plus précisément, Si l'écart DeltaSOC est positif, autrement dit si la valeur courante d'état de charge de la batterie SOCBatHT est supérieur à la valeur de consigne d'état de charge de la batterie SOCCible, on va alors décharger la batterie en pilotant majoritairement la machine électrique en traction, tandis que si l'écart DeltaSOC est négatif, autrement dit si la valeur courante d'état de charge de la batterie SOCBatHT est inférieur à la valeur de consigne d'état de charge de la batterie SOCCible, on va charger la batterie en pilotant majoritairement la machine électrique en régénération.

Pour ce faire, l'élaboration de la consigne de couple CplMEWUpTgt à demander à la machine électrique comprend la génération d'un signal de commande PWM (acronyme anglais pour « Pulse Width Modulation ») de la machine électrique, avec une période, une amplitude et un rapport cyclique à déterminer en fonctions des conditions d'entrée de la stratégie, en particulier de l'écart DeltaT de température et de l'écart DeltaSOC d'état de charge de la batterie. Autrement dit, le signal de commande PWM correspond au signal vu aux bornes de la batterie permettant de piloter la batterie en traction et en régénération via la consigne de couple CplMEWUpTgt envoyée à la machine électrique.

Comme représenté sur la figure unique, le rapport cyclique TonWUp du signal PWM vu par la batterie est contrôlé en fonction de l'écart DeltaSOC entre la valeur courante d'état de charge de la batterie SOCBatHT et la valeur de consigne d'état de charge de la batterie SOCCible. Ainsi, lorsqu'un écart est déterminé dans un bloc de comparaison 1.1 entre la valeur courante d'état de charge de la batterie SOCBatHT et la valeur de consigne SOCBatHT reçues en entrées, cet écart DeltaSOC est transformé en une consigne de rapport cyclique TonWUp via une calibration, sous la forme d'une cartographie 1.2 de consigne de rapport cyclique, qui fournit une valeur de rapport cyclique en fonction de l'écart DeltaSOC déterminé. A noter que le rapport cyclique maximal est préférentiellement appliqué pour un écart de température DeltaT de 50°C.

En particulier, la calibration est telle que si l'écart DeltaSOC est positif, on régule le rapport cyclique TonWUp du signal PWM à une valeur supérieure à 0,5, de sorte que la moyenne du couple appliqué à la machine électrique est positive, impliquant que la machine est pilotée en traction. On commande alors dans ces conditions la décharge de la batterie. Par contre, si l'écart DeltaSOC est négatif, on régule le rapport cyclique TonWUp du signal PWM à une valeur inférieure à 0,5, de sorte que la moyenne du couple appliqué à la machine électrique est négative, impliquant que la machine est pilotée en génératrice. On commande alors dans ces conditions la charge de la batterie. Le rapport cyclique TonWUp ainsi régulé est fourni à un bloc de synthèse 1.3 permettant de synthétiser le signal PWM vu par la batterie.

L'amplitude CplMaxMEElecWUp du signal PWM est quant à elle régulée en fonction de l'écart de température DeltaT déterminé dans un bloc de comparaison 1.4 recevant en entrée la valeur courante de température TemCellBatHT et la valeur de consigne de température TempCellBatHTCible. On utilise également une cartographie 1.5 pour fournir une amplitude de couple CplMaxMEElecWUp à demander à la machine électrique en fonction de l'écart de température DeltaT déterminé. La cartographie 1.5 est telle que plus l'écart de température DeltaT est important, plus on appliquera une amplitude de couple à demander à la machine électrique importante. Autrement dit, l'amplitude du signal PWM généré est proportionnelle à l'écart de température DeltaT. A noter que l'amplitude du couple en positif et en négatif n'est pas exactement symétrique, car la batterie ne se charge et ne se décharge pas symétriquement. Aussi, une valeur de déviation prédéterminée DeltaCWUp, fournie en tant que paramètre du bloc de synthèse 1.3, est ajoutée à l'amplitude du couple en négatif pour tenir compte de cette asymétrie entre la charge et la décharge. En outre, l'amplitude de couple CplMaxMEElecWUp à demander à la machine électrique est fourni au bloc de synthèse 1.3 du signal PWM par l'intermédiaire d'un bloc de limitation 1.6 permettant de limiter le couple électrique demandé en fonction d'une valeur maximale de seuil prédéterminée CplmaxMEElec et d'une valeur minimale de seuil prédéterminée CplMinMEElec, représentées sous la référence unique CplMaxMinMEElec sur la figure unique.

Quant à la période WUpPeriod du signal PWM synthétisé dans le bloc de synthèse 1.3, elle est fournie en tant que paramètre du bloc de synthèse 1.3.

Le signal PWM synthétisé par le bloc de synthèse 1.3 suivant les principes exposés ci-dessus, définit donc la forme du signal de couple vu au niveau de la batterie CplMEElecWupRaw, correspondant au pilotage de la machine électrique en traction et en génératrice en fonction de l'écart de température DeltaT et de l'écart d'état de charge DeltaSOC, pour réchauffer la batterie jusqu'à la valeur de consigne de température.

Une fois ce signal PWM CplMEElecWupRaw synthétisé par le bloc de synthèse 1.3, il est nécessaire de calculer le couple CplMEWUpTgt à demander à la machine électrique, en prenant en compte les pertes au niveau de la batterie et la consommation nécessaire pour le convertisseur DC-DC couplé à la batterie, pour que la batterie puisse voir effectivement le signal PWM synthétisé à ses bornes. Pour ce faire, on déduit du signal PWM généré précédemment le couple représentatif des pertes au niveau de la batterie PertesMecaME et le couple équivalent à la consommation du convertisseur DC-DC couplé à la batterie CplMecaDCDC, afin de convertir l'énergie électrique vue par la batterie en énergie mécanique à demander à la machine électrique sous la forme de la consigne de couple CplMEWUpTgt, finalement envoyée à la machine électrique.

## Revendications

1. Procédé de gestion de la température d'une batterie électrique d'un véhicule automobile en phase de roulage, ledit véhicule comprenant un groupe moto-propulseur hybride comprenant un moteur thermique et au moins une machine électrique alimentée par ladite batterie, ledit procédé comprenant une étape de chauffage de la batterie jusqu'à une valeur de consigne de température, l'étape de chauffage de la batterie comprenant une étape d'élaboration d'une consigne de couple (CpIMEWUpTgt) à appliquer à la machine électrique, ladite consigne de couple étant apte à commander aux bornes de la batterie un courant de charge ou un courant de décharge de la batterie, en tenant compte d'une part, d'un premier écart (DeltaT) entre une valeur courante de température (TempCellBatHT) et ladite valeur de consigne de température (TempCellBatHTCible) et, d'autre part, d'un second écart (DeltaSOC) entre une valeur courante d'état de charge de la batterie (SOCBatHT) et une valeur de consigne d'état de charge de la batterie (SOCCible), le procédé étant **caractérisé en ce que** l'étape d'élaboration de ladite consigne de couple (CpIMEWUpTgt) comprend la génération d'un signal de commande PWM (CpIMEWUpRaw) de ladite machine électrique, dont le rapport cyclique (TonWUp) est contrôlé en fonction dudit second écart (DeltaSOC), le rapport cyclique étant supérieur à 0,5 lorsque ledit second écart est positif, le rapport cyclique étant inférieur à 0,5 lorsque ledit second écart est négatif.

2. Procédé selon la revendication 1, **caractérisé en ce que** lesdits courants de charge et de décharge de la batterie sont pilotés en fonction du signe dudit second écart (DeltaSOC).

3. Procédé selon l'une quelconque des revendications 1 à 2, **caractérisé en ce que** l'amplitude (CplMaxMEElecWUp) dudit signal PWM est régulée en fonction dudit premier écart (DeltaT).

4. Procédé selon la revendication 3, **caractérisé en ce que** l'amplitude (CplMaxMEEWUp) dudit signal PWM est proportionnelle audit premier écart (DeltaT).

5. Procédé selon l'une quelconque des revendications 1 à 4, **caractérisé en ce que** l'étape d'élaboration de ladite consigne de couple (CpIMEWUpTgt) à appliquer à ladite machine électrique comprend la détermination de ladite consigne de couple (CpIMEWUpTgt) sur la base dudit signal PWM généré précédemment auquel on déduit un couple représentatif des pertes au niveau de ladite batterie (PertesMecaME) et un couple équivalent à la consommation d'un convertisseur DC-DC couplé à ladite batterie (CplMecaDCDC).

## Patentansprüche

1. Verwaltungsverfahren für die Temperatur einer elektrischen Batterie eines Kraftfahrzeugs während der Fahrt, wobei das Fahrzeug eine hybride Motorantriebsgruppe beinhaltet, die einen Verbrennungsmotor und mindestens eine elektrische Maschine, die von der Batterie gespeist wird, beinhaltet, wobei das Verfahren einen Schritt des Aufwärmens der Batterie bis auf einen Temperatursollwert beinhaltet, wobei der Schritt des Aufwärmens der Batterie einen Schritt des Ermittelns eines auf die elektrische Maschine anzuwendenden Drehmomentsollwerts (CpIMEWUpTgt) beinhaltet, wobei der Drehmomentsollwert dazu fähig ist, den Klemmen der Batterie einen Ladestrom oder einen Entladestrom der Batterie zuzuweisen, unter Berücksichtigung einerseits einer ersten Differenz (DeltaT) zwischen einem aktuellen Temperaturwert (TempCellBatHT) und dem Temperatursollwert (TempCellBatHTCible) und anderseits einer zweiten Differenz (DeltaSOC) zwischen einem aktuellen Ladezustandswert der Batterie (SOCBatHT) und einem Ladezustandssollwert der Batterie (SOCCible), wobei das Verfahren **dadurch gekennzeichnet ist, dass** der Schritt des Ermittelns des Drehmomentsollwerts (CpIMEWUpTgt) das Erzeugen eines PWM-Steuersignals (CpIMEWUpRaw) für die elektrische Maschine beinhaltet, dessen Tastgrad (TonWUp) in Abhängigkeit von der zweiten Differenz (DeltaSOC) überwacht wird, wobei der Tastgrad größer als 0,5 ist, wenn die zweite Differenz positiv ist, wobei der Tastgrad kleiner als 0,5 ist, wenn die zweite Differenz negativ ist.

2. Verfahren nach Anspruch 1, **dadurch gekennzeichnet, dass** der Lade- und der Entladestrom der Batterie in Abhängigkeit von dem Vorzeichen der zweiten Differenz (DeltaSOC) angesteuert werden.

3. Verfahren nach einem der Ansprüche 1 bis 2, **dadurch gekennzeichnet, dass** die Amplitude (CpIMaxMEEIecWUp) des PWM-Signals in Abhängigkeit von der ersten Differenz (DeltaT) geregelt wird.

4. Verfahren nach Anspruch 3, **dadurch gekennzeichnet, dass** die Amplitude (CpIMaxMEEWUp) des PWM-Signals zu der ersten Differenz (DeltaT) proportional ist.

5. Verfahren nach einem der Ansprüche 1 bis 4, **dadurch gekennzeichnet, dass** der Schritt des Ermittelns des auf die elektrische Maschine anzuwendenden Drehmomentsollwerts (CpIMEWUpTgt) das Bestimmen des Drehmomentsollwerts (CpIMEWUpTgt) auf Grundlage des zuvor erzeugten PWM-Signals beinhaltet, von dem ein Drehmoment, das für die Verluste im Bereich der Batterie (PertesMecaME) repräsentativ ist, und ein Drehmoment, das dem Verbrauch eines mit der Batterie gekoppelten DC/DC-Wandlers entspricht (CpIMecaDCDC), abgezogen werden.

## Claims

1. Method for managing the temperature of an electric battery of a motor vehicle in running phase, said vehicle comprising a hybrid power train comprising a heat engine and at least one electrical machine powered by said battery, said method comprising a step of heating of the battery to a temperature setpoint value, the step of heating of the battery comprising a step of generation of a torque setpoint (CplMEWUpTgt) to be applied to the electrical machine, said torque setpoint being able to control, at the terminals of the battery, a charge current or a discharge current of the battery, by taking account, on the one hand, of a first difference (DeltaT) between a current temperature value (TempCellBatHT) and said temperature setpoint value (TempCellBatHTCible) and, on the other hand, of a second difference (DeltaSOC) between a current value of the state of charge of the battery (SOCBatHT) and a setpoint value of the state of charge of the battery (SOCCible), the method being **characterized in that** the step of generation of said torque setpoint (CplMEWUpTgt) comprises the generation of a PWM control signal (CplMEWUpRaw) for said electrical machine, the duty cycle (TonWUp) of which is controlled as a function of said second difference (DeltaSOC), the duty cycle being greater than 0.5 when said second difference is positive, the duty cycle being less than 0.5 when said second difference is negative.

2. Method according to Claim 1, **characterized in that** said charge and discharge currents of the battery are driven as a function of the sign of said second difference (DeltaSOC) .

3. Method according to either one of Claims 1 and 2, **characterized in that** the amplitude (CplMaxMEElecWUp) of said PWM signal is regulated as a function of said first difference (DeltaT).

4. Method according to Claim 3, **characterized in that** the amplitude (CplMaxMEEWUp) of said PWM signal is proportional to said first difference (DeltaT).

5. Method according to any one Claims 1 to 4, **characterized in that** the step of generation of said torque setpoint (CplMEWUpTgt) to be applied to said electrical machine comprises the determination of said torque setpoint (CplMEWUpTgt) on the basis of said PWM signal generated previously, from which is deduced a torque representative of the losses at said battery (PertesMecaME) and a torque equivalent to the consumption of a DC-DC converter coupled to said battery (CplMecaDCDC) .
